(19) Europäisches Patentamt
European Patent Office
Office européen des brevets

(11) **EP 1 909 381 A1**

(12) **EUROPEAN PATENT APPLICATION**
published in accordance with Art. 153(4) EPC

(43) Date of publication:
**09.04.2008 Bulletin 2008/15**

(51) Int Cl.:
***H02M 3/28*** (2006.01)

(21) Application number: **05778595.8**

(22) Date of filing: **06.09.2005**

(86) International application number:
**PCT/JP2005/016279**

(87) International publication number:
**WO 2007/000830 (04.01.2007 Gazette 2007/01)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.06.2005 JP 2005190787**

(71) Applicant: **MURATA MANUFACTURING CO., LTD.**
**Nagaokakyo-shi, Kyoto 617-8555 (JP)**

(72) Inventors:
• **NISHIYAMA, Takayoshi**
**Kyoto 617-8555 (JP)**

• **TAKEMURA, Hiroshi**
**Kyoto 617-8555 (JP)**
• **UEKI, Koichi**
**Kyoto 617-8555 (JP)**

(74) Representative: **Zinnecker, Armin et al**
**Lorenz Seidler Gossel**
**Rechtsanwähe -Patentanwälte**
**Widenmayerstrasse 23**
**80538 München (DE)**

(54) **DC/DC CONVERTER**

(57) A DC-DC converter includes a resonant coil (Lr) for zero voltage switching, the resonant coil being connected in series to a primary winding (Np), and a full-bridge switching circuit driven by phase shift control. The DC-DC converter includes a first regenerative diode (D7) disposed between a connection between the primary winding (Np) and the resonant coil (Lr) and a first terminal of an input power supply (Vin) and a second regenerative diode (D8) disposed between the connection and a second terminal of the input power supply (Vin).

This structure enables a surge resulting from a reverse recovery current in rectifier diodes (D1, D2) at the secondary side to be regenerated to the input power supply via the regenerative diodes (D7, D8), thus reducing a surge voltage applied to the rectifier diodes (D1, D2). As a result, a rectifier diode that has a low breakdown voltage and a small forward voltage drop can be used. The loss caused by a forward current in the rectifier diodes can be reduced. Additionally, the loss in the regenerative diodes (D7, D8) can also be reduced, compared with when a snubber circuit is provided in the secondary side.

FIG. 3

**Description**

Technical Field

The present invention relates to a DC-DC converter and, in particular, to an insulated DC-DC converter that steps down a voltage and transmits a high electric power.

Background Art

Hybrid cars, which have both an engine and an electric motor as a power source, are becoming popular. A hybrid car has a low-voltage (e.g., 12V) battery for an engine and electrical components and a high-voltage (e.g., 300V) battery for an electric motor. Because a hybrid car typically does not have an alternator for charging a low-voltage battery, an insulated step-down DC-DC converter that uses a high-voltage battery as an input power source to charge a low-voltage battery and to supply a power to electrical components is necessary. Power consumption has been increasing with the recent increase in the number of electrical components, so it is necessary for the DC-DC converter to convert a power on the order of kilowatts. In this case, the amount of heat generated by loss occurring within the DC-DC converter is large, which results in an increase in the size and weight of a cooling device added for dealing with heat dissipation. This leads to an increase in the total weight of vehicle-mounted components. Accordingly, not only to improve conversion efficiency but also to reduce the amount of generated heat and the weight of the cooling device, it is necessary to reduce the loss of the DC-DC converter.

There are many types of DC-DC converters. One known example of an insulated switching DC-DC converter suited for high power conversion is a full-bridge DC-DC converter disclosed in Non-Patent Document 1.

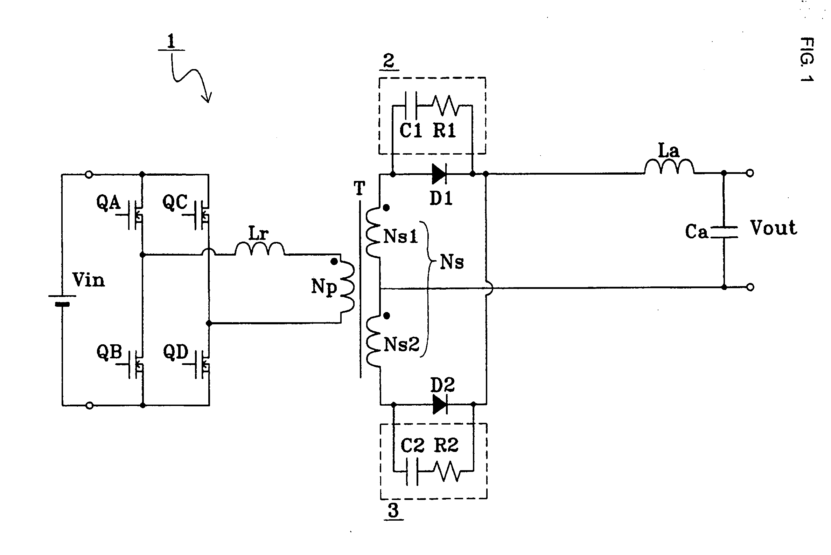

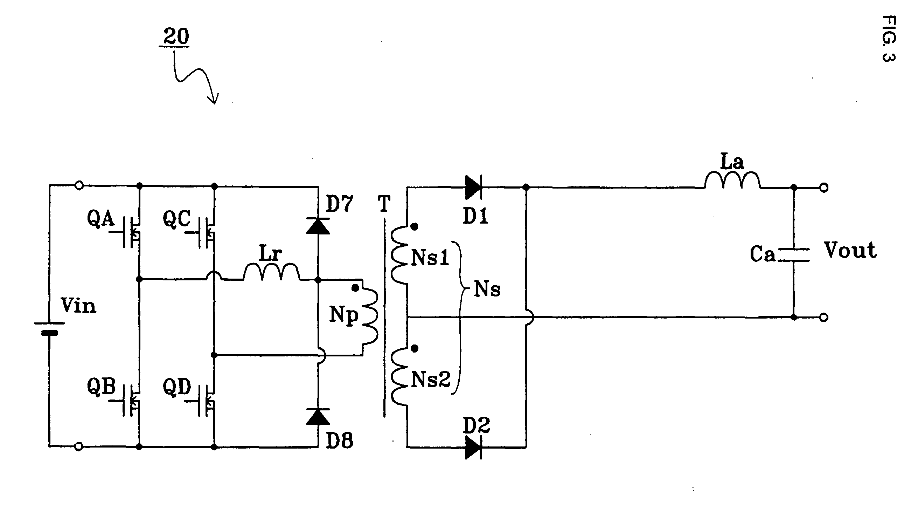

Fig. 1 illustrates a circuit diagram of a known phase-shift full-bridge DC-DC converter. This is the one illustrated in Fig. 3 in Non-Patent Document 1.

In a DC-DC converter 1 illustrated in Fig. 1, a series circuit constituted by switching elements QA and QB and a series circuit constituted by switching elements QC and QD are connected to respective opposite terminals of an input power supply Vin (input voltage vin). A transformer T includes a primary winding Np and a secondary winding Ns. The primary winding Np is connected in series to a resonant coil Lr. A first terminal of this series circuit (a resonant-coil side terminal in this case) is connected to the connection between the switching elements QA and QB, and a second terminal thereof is connected to the connection between the switching elements QC and QD. The switching elements QA, QB, QC, and QD constitute a power metal oxide semiconductor field-effect transistor (power MOSFET) for electric power. Although not illustrated, the power MOSFET includes an internal capacitor and a body diode, both of , which are disposed between a drain and a source. In the body diode, the direction from the source to the drain is a forward direction. A gate being a control terminal is connected to a control circuit (not shown).

A first terminal of the secondary winding Ns of the transformer T is connected to an anode of a rectifier diode D1, and a second terminal thereof is connected to an anode of a rectifier diode D2. A cathode of the rectifier diode D1 and a cathode of the rectifier diode D2 are connected together and connected to a first end (+) of an output terminal Vout via a choke coil La. The secondary winding Ns is divided into secondary windings Ns1 and Ns2 with a midtap disposed therebetween. The midtap is connected to a second end (-) of the output terminal Vout. A smoothing capacitor Ca is connected between the first and second ends of the output terminal Vout.

Additionally, the rectifier diode D1 is connected in parallel to a series circuit constituted by a resistor R1 and a capacitor C1. Similarly, the rectifier diode D2 is connected in parallel to a series circuit constituted by a resistor R2 and a capacitor C2. The above-mentioned series circuits, each constituted by a resistor and a capacitor, constitute RC snubber circuits 2 and 3, respectively.

In the DC-DC converter 1 constructed as described above, the switching elements QA and QB are alternately turned on and off at a duty cycle of 50% with a short dead time in which both are in an off state. Similarly, the switching elements QC and QD are alternately turned on and off with a duty cycle of approximately 50%. The switching frequencies are both constant.

When the switching elements QA and QD are in an on state, the switching elements QB and QC are in an off state. At this time, the input voltage vin is applied to the series circuit constituted by the resonant coil Lr and the primary winding Np in such a way that the resonant coil Lr side is positive. In contrast, when the switching elements QB and QC are in the on state, the switching elements QA and QD are in the off state. At this time, the voltage is applied in such a way that the resonant coil Lr side is negative. When the switching elements QA and QC are in the on state and the switching elements QB and QD are in the off state and when the switching elements QB and QD are in the on state and the switching elements QA and QC are in the off state, both terminals of this series circuit are at the same potential. Therefore, no voltage is applied to this series circuit.

The relationship between the turn-on timing and the turn-off timing of the switching elements QA and QB and the turn-on timing and the turn-off timing of the switching elements QC and QD is not fixed. This is controlled via output-voltage detection and feedback means (not shown), thereby changing the amount of transmitted power to stabilize the output voltage. For example, for a relationship in which the switching element QD is turned on immediately after the switching element QA is turned on, the input voltage is applied to the primary winding Np until the switching element QA is turned off. Therefore, the amount of transmitted power is large. In contrast, for a relationship in which the switching element QD in turned on immediately before the switching element QA is turned off, the length of time that the input voltage is applied to the primary winding Np is short. Therefore, the amount of transmitted power is small. The driving method of this type does not directly control the duty of each switching element, but control only the switching timing of the switching elements QA and QB and the switching timing of the switching elements QC and QD. This is called the phase shift control method.

In addition, the DC-to-DC converter 1 includes the resonant coil Lr, which is connected in series to the primary winding Np. The resonant coil Lr is provided for zero voltage switching (ZVS) of each of the switching elements QA, QB, QC, and QD. That is, by use of resonance of the internal capacitor of each switching element and the resonant coil Lr, the switching element is turned on when the voltage between both terminals (between the drain and the source) is approximately zero. The value of inductance of the resonant coil Lr is determined based on, for example, the relationship with the magnitude of the internal capacitor of the switching element. For the phase-shift full-bridge DC-DC converter, zero voltage switching of the switching element can be achieved relatively easily by the provision of the resonant coil Lr.

For a full-bridge DC-DC converter that performs phase shift control while achieving zero voltage switching, it is necessary to control precisely four switching elements. This control method has already been popular, and a control IC therefor is also commercially available (for example, UC3875 from Texas Instruments).

The DC-to-DC converter 1 includes a center-tap rectifier circuit using two typical rectifier diodes at the secondary side. When a voltage that is positive on the resonant coil Lr side is applied to the primary side, a forward voltage to the rectifier diode D1 occurs in the secondary winding Ns. A current flows from the secondary winding Ns1 to the rectifier diode D1 to the choke coil La to a load (not shown) to the secondary winding Ns1. This current increases with time. When the voltage become nonexistent at the primary side, a current also flows in the same path, but the current value reduces with time. When a voltage that is negative on the resonant coil Lr side is applied to the primary side, oppositely, a forward voltage to the rectifier diode D2 occurs in the secondary winding Ns. This causes a current passing through the rectifier diode D1 to rapidly approach zero. Therefore, oppositely, a current flows from the secondary winding Ns2 to the rectifier diode D2 to the choke coil La to a load (not shown) to the secondary winding Ns2. The above-mentioned behaviors are repeated.

In the above-described operations, the current passing through the rectifier diode D1 does not stop at the time the forward current becomes zero, but a current (reverse recovery current) flows in the reverse direction only over a period of reverse recovery time of the diode. This reverse recovery current flows along a short-circuit path from the rectifier diode D1 to the secondary winding Ns1 to the secondary winding Ns2 to the rectifier diode D2 to the rectifier diode D1. Because this reverse recovery current suddenly stops, a surge voltage occurs in the secondary winding Ns1 and is applied to the rectifier diode D1 in the reverse direction. In general, a rectifier diode that has a high breakdown voltage, such as this surge voltage, tends to have a large forward voltage drop Vf. An increase in the forward voltage drop Vf increases losses occurring when a current flows in the forward direction. This is not desired for conversion efficiency and generation of heat.

To deal with this, the RC snubber circuit 2 including the resistor R1 and the capacitor C1 connected together in series for absorbing the surge voltage is provided to the rectifier diode D1. Similarly, the RC snubber circuit 3 including the resistor R2 and the capacitor C2 connected together in series for absorbing a surge voltage resulting from a reverse recovery current in the rectifier diode D2 is provided to the rectifier diode D2. In this case, a current resulting from the surge voltage is passed through the resistor R1 (or R2) and is converted to heat. Although this is the loss to the DC-DC converter, the rectifier diodes D1 and D2 having a relatively small forward voltage drop can be used, and thus, the loss occurring when the current flows in the forward direction can be reduced. Accordingly, this case can reduce the loss on the whole, compared with when an RC snubber circuit is not used.

However, this reduction in the loss is not sufficient for use in a high power DC-DC converter. One example of a proposed improvement for this is a DC-DC converter illustrated in Fig. 2. This is the one shown in Non-Patent Document 1.

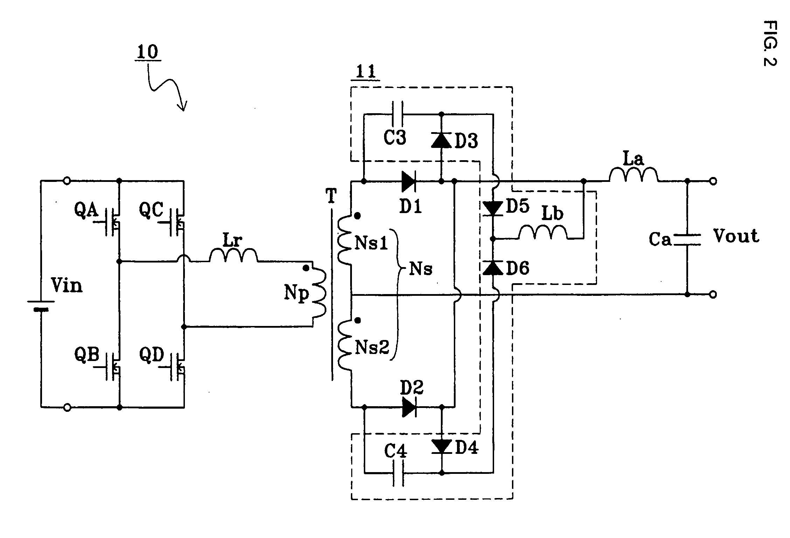

A DC-DC converter 10 illustrated in Fig. 2 includes a lossless snubber circuit 11 instead of the two snubber circuits in the DC-to-DC converter 1. Features other than the snubber circuit are similar to those in Fig. 1, so the description thereof is omitted.

In the DC-DC converter 10 illustrated in Fig. 2, an anode of a diode D3 is connected to the cathode of the rectifier diode D1, and a cathode of the diode D3 is connected to the anode of the rectifier diode D1 via a capacitor C3. The connection between the diode D3 and the capacitor C3 is connected to an anode of a diode D5. An anode of a diode D4 is connected to the cathode of the rectifier diode D2, and a cathode of the diode D4 is connected to the anode of the rectifier diode D2 via a capacitor C4. The connection between the diode D4 and the capacitor C4 is connected to an anode of a diode D6. A cathode of the diode D5 and a cathode of the diode D6 are connected together and connected to the cathode of the rectifier diode D1 (rectifier diode D2) via a coil Lb. The diodes D3, D4, D5, and D6, the capacitors C3 and C4, and the coil Lb constitute the lossless snubber circuit 11.

In the lossless snubber circuit 11, a current resulting from a surge voltage occurring in the reverse direction with respect to the rectifier diode D1 is temporarily stored in the capacitor C3 as charges via the diode D3. In the next cycle, the charges stored in the capacitor C3 are emitted to the output via the diode D5 and the coil Lb. Similarly, a surge voltage occurring in the reverse direction with respect to the rectifier diode D2 is temporarily stored and then is emitted to the output.

The lossless snubber circuit 11 has no resistor. Therefore, according to Non-Patent Document 1, the loss in this snubber circuit can be further reduced, compared with when an RC snubber circuit is used. The rectifier diode having a lower breakdown voltage (200V) can be used, compared with when an RC snubber is used (300V). Thus, the loss caused by the forward current can be reduced. In Non-Patent Document 1, comparison of the loss between both cases was made. According to the compassion, conversion efficiency of the DC-DC converter is 88.1% for when an RC snubber circuit is included, whereas the conversion efficiency is improved to 89.5% for when a lossless snubber circuit is included. Non-Patent Document 1: "Daiyohryo DC-DC converter no shutsuryoku seiryu diode niokeru musonshitsu snubber no teian" ("Non-Dissipative Snubber for Rectifying Diodes in a High-Power DC-DC Converter"), IEEJ Transactions on Industry Applications, Vol. 125 (2005), No. 4, pp. 366-371

Disclosure of Invention

Problems to be Solved by the Invention

For the DC-DC converter 10 illustrated in Fig. 2, for example, a surge current based on a reverse recovery current in the rectifier diode D1 is passed through the diode D3 and is then temporarily stored in the capacitor C3, and after that, at the next cycle, is emitted to the output through the diode D5 and the coil Lb. Thus, losses resulting from forward voltage drops of the diodes D3, D4, D5, and D6 occur. In particular, the losses occurring in the diodes D3 and D4 is large because a large surge current is passed therethrough. The losses resulting from the forward voltage drops in the above-mentioned diodes and the amount of heat generated by the losses are smaller than those occurring when power is consumed by a resistor in an RC snubber circuit. However, they are not negligible for a high-power DC-DC converter, so further improvement is desired. In addition, according to the DC-DC converter 10, a rectifier diode having a low breakdown voltage can be used, and as a result, the loss resulting from the forward current and generated heat can be reduced. However, the loss and generated heat are as much as approximately half of the total loss, so further improvement is desired also in this respect.

An object of the present invention is to solve the above problems. The present invention provides an insulated DC-DC converter that can further reduce losses and heat generated by the losses.

Means for Solving the Problems

To attain the above object, a DC-DC converter according to the present invention including an input power supply, an isolating transformer including a primary winding and a secondary winding, a resonant coil for zero voltage switching, the resonant coil being connected in series to the primary winding, a full-bridge switching circuit connected to a series circuit constituted by the primary winding and the resonant coil, the switching circuit being driven by phase shift control, and a rectifier circuit attached to the secondary winding includes a first regenerative diode disposed between a connection between the primary winding and the resonant coil and a first terminal of the input power supply and a second regenerative diode disposed between the connection and a second terminal of the input power supply.

Advantages

In a DC-DC converter according to the present invention, a surge energy resulting from a reverse recovery current in a rectifier diode is regenerated to an input power supply via from the connection between a primary winding and a resonant coil to a first or second regenerative diode at the primary side. In the case of a step-down DC-DC converter, because, at the primary side, the voltage is increased and the current is reduced in accordance with the turns ratio of a transformer, the loss caused by the forward voltage drop in the first or second regenerative diode through which the regenerative current is passed is reduced. Because the surge voltage occurring in the secondary side is further reduced, a rectifier diode that has a lower breakdown voltage and a smaller forward voltage drop can be used. Therefore, the loss occurring when the current flows in the forward direction can be reduced. As a result, an insulated DC-DC converter that has lower losses, excellent conversion efficiency, and simplified heat dissipating means (e.g., a cooling device) and thus has reduced size and weight can be achieved.

Brief Description of the Drawings

Fig. 1 is a circuit diagram of a known DC-DC converter.
Fig. 2 is a circuit diagram of another known DC-DC converter.
Fig. 3 is a circuit diagram of a DC-DC converter according to an embodiment of the present invention.
Fig. 4 is a timing diagram of each element (QA, QB, QC, QD, Np, D7, D1 and D2) in the DC-DC converter illustrated in Fig. 3.
Fig. 5 shows voltage-current characteristics of two diodes of a diode with 150V breakdown voltage and a diode with 200V breakdown voltage.
Fig. 6 is a circuit diagram of a DC-DC converter according to another embodiment of the present invention.
Fig. 7 is a circuit diagram of a DC-DC converter according to still another embodiment of the present invention.
Fig. 8 is a circuit diagram of a DC-DC converter according to still further another embodiment of the present invention.

Reference Numerals

20, 30, 40, 50: DC-DC Converter
QA, QB, QC, QD: Switching Element
Vin: Input Power Supply
Vout: Output Terminal
T: Transformer
Np: Primary Winding
Ns, Ns1, Ns2, Ns3: Secondary Winding
D1, D2, D9, D10: Rectifier Diode
QE, QF, QG, QH: Synchronous Rectifier Switching Element
D7, D8: Regenerative Diode
Lr: Resonant Coil
La, L1, L2: Choke Coil
Ca: Smoothing Capacitor

Best Mode for Carrying Out the Invention

(First Embodiment)

Fig. 3 is a circuit diagram of a DC-DC converter according to an embodiment of the present invention. The fundamental structure of a DC-DC converter 20 illustrated in Fig. 3 is a structure in which the snubber circuits are removed from the DC-to-DC converter 1 illustrated in Fig. 1 or the snubber circuit is removed from the DC-DC converter 10 illustrated in Fig. 2. Thus, the description thereof is omitted.

The DC-DC converter 20 includes, in addition to the above-mentioned fundamental structure, a regenerative diode D7 (first regenerative diode) and a regenerative diode D8 (second regenerative diode). The regenerative diode D7 is connected between the connection between a resonant coil Lr and a primary winding Np and a first terminal (+) of an input power supply Vin such that a cathode of the regenerative diode D7 faces the first terminal. The regenerative diode D8 is connected between the connection between the resonant coil Lr and the primary winding Np and a second terminal (-) of the input power supply Vin such that an anode of the regenerative diode D8 faces the second terminal.

As described above, for the DC-DC converter 20, an additional portion to the fundamental structure is only two components, i.e., the regenerative diodes D7 and D8. Therefore, the number of components and the size of circuitry can be reduced, compared with not only the DC-DC converter 10 including seven added components and but also the DC-to-DC converter 1 including four added components.

In the DC-DC converter 20 having the above-described structure, for example, when a surge voltage resulting from a reverse recovery current in a rectifier diode D1 attempts to occur in a secondary winding Ns1, a voltage based on the turns ratio between the primary winding and the secondary winding also occurs in the primary winding Np. This voltage is a forward voltage to the regenerative diode D7, and a regenerative current is passed through the conducting regenerative diode D7 and regenerated to the input power supply Vin. Similarly, when a surge voltage resulting from a reverse recovery current in a rectifier diode D2 attempts to occur in a secondary winding Ns2, a regenerative current is passed through the regenerative diode D8 and regenerated to the input power supply Vin.

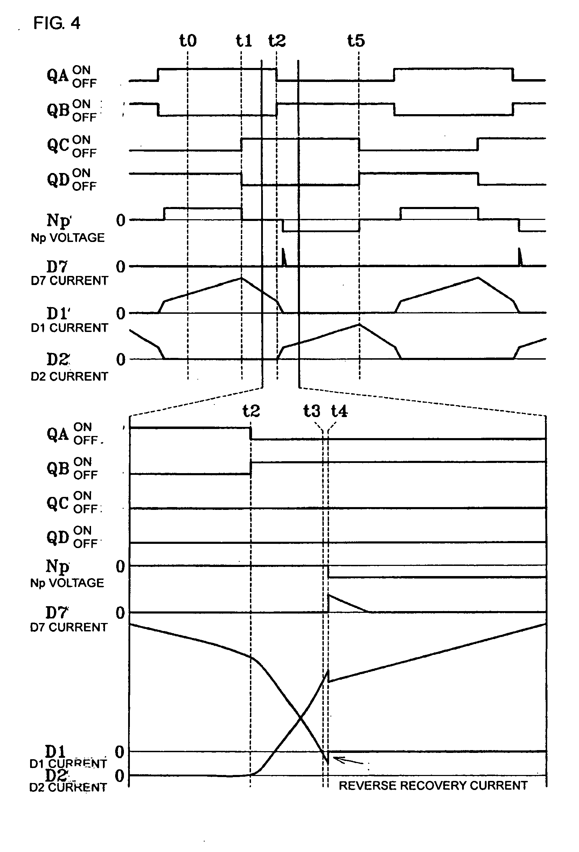

The above-mentioned regeneration operation will be described in detail below with reference to a timing diagram shown in Fig. 4. The timing diagram shows simulation results of voltages, currents, and signal states for each unit of the DC-DC converter 20. The simulation conditions are as follows: the power-supply voltage vin = 300V, the number n1 of turns in the primary winding Np = 8, the number n2 of turns in the secondary windings Ns1 and Ns2 = 1, the output voltage vout = 14V, and the switching frequency = 100 kHz. In an actual circuit, to avoid both switching elements QA and QB from being in the on state at the same time or both switching elements QC and QD from being in the on state at the same time, a dead time in which both are in the off state is provided. However, this is not the main part of the invention, so the simulation does not take it into account.

In Fig. 4, the horizontal axis represents time. QA, QB, QC, and QD in the vertical axis represent states of the switching elements QA, QB, QC, and QD, respectively. Each switching element is on when being at H level and is off when being at L level. Np Voltage in the vertical axis represents the voltage of the primary winding Np. D1 current represents a current that is positive in the forward direction and passes through the rectifier diode D1, and D2 current represents a current that is positive in the forward direction and passes through the rectifier diode D2. D7 current is a current passing through the regenerative diode D7. A current passing through the regenerative diode D8 is omitted because it is simply shifted one-half cycle from the current passing through the regenerative diode D7.

First, at time t0, as illustrated in the state of each switching element, the switching element QA is on, the switching element QB is off, the switching element QC is off, and the switching element QD is on, and a voltage that is positive on the resonant coil Lr side is applied to the primary winding Np. This causes a voltage to occur in the secondary winding Ns1, and the voltage causes a current to pass through the rectifier diode D1. This current increases with time. A voltage occurring in the secondary winding Ns2 is in the reverse direction with respect to the rectifier diode D2, so no current flows through the rectifier diode D2.

At time t1, the switching element QC is turned on and the switching element QD is turned off. The voltage applied to the primary winding Np then becomes zero. The current continues flowing in the rectifier diode D1 in the same path, but changes to a tendency to decrease with time. Because no voltage is applied to the secondary winding Ns2, the current in the rectifier diode D2 remains zero.

At time t2, the switching element QA is turned off and the switching element QB is turned on. A reverse voltage then occurs in the secondary windings Ns1 and Ns2. The current passing through the rectifier diode D1 reduces rapidly. To compensate a decrease in the current passing from the rectifier diode D1 to a choke coil La, a commutation current flows in the rectifier diode D2 and increases.

At time t3, the current passing through the rectifier diode D1 becomes zero. Subsequent to that, a reverse recovery current flows only for a short time. The reverse recovery current flows from the rectifier diode D1 to the secondary winding Ns1 to the secondary winding Ns2 to the rectifier diode D2 to the rectifier diode D1, as previously described, and is a short-circuit current.

At time t4, the reverse recovery current finishes flowing. The current passing through the rectifier diode D1 rapidly becomes zero. At this time, a voltage that is negative on the resonant coil Lr side is applied to the primary winding Np. This causes the current passing through the rectifier diode D2 to increase with time.

A surge voltage generated by energy stored in a transformer T resulting from this reverse recovery current causes a regenerative current to flow in the regenerative diode D7 only for a short time. The regenerative current flows from the regenerative diode D7 to the input power supply Vin to a body diode of the switching element QD to the primary winding Np to the regenerative diode D7. To regenerate this current at the secondary side, as in the case of the DC-DC converter 10, the maximum value of the current passing through the regenerative diode is as much as four times by calculation in accordance with the turns ratio, and in proportion to this, the loss in the regenerative diode increases. Additionally, for the lossless snubber circuit of the DC-DC converter 10, a current for regeneration also flows in the diode each of charging and discharging the capacitor, and thus, the loss also increases. In particular, when the capacitor is charged, a surge current having a large peak flows in the diode, so the loss is also large. Accordingly, it is apparent even from a simple comparison of current values that the present invention can reduce the loss more greatly. As described above, the loss caused by the current passing through the regenerative diode in the DC-DC converter 20 according to the present invention is much smaller than the loss occurring in the lossless snubber circuit in the DC-DC converter 10.

Referring back to the description of the timing diagram, at time t5, the switching element QC is turned off and the switching element QD is turned on. A half cycle from time t1 ends, and a half cycle inverted from a half cycle from time t1 to time t5 starts. In the inverted half cycle, when a surge voltage resulting from a reverse recovery current in the rectifier diode D2 attempts to occur in the secondary winding Ns2, a regenerative current flows in the regenerative diode D8 and is regenerated to the input power supply. The regenerative current flows from the regenerative diode D8 to the primary winding Np to the body diode of the switching element QC to the input power supply Vin to the regenerative diode D8.

A comparison between the DC-DC converter 10, which includes the lossless snubber circuit, and the DC-DC converter 20 according to the present invention will now be described with reference to Table 1.

[Table 1]

| | DC-DC Converter 10 | DC-DC Converter 20 |
|---|---|---|
| No. of Components Added | 7 | 2 |
| Surge Voltage [V] of Rectifier Diode | $4 \times \dfrac{Vin}{n}$ | $(2+\alpha) \times \dfrac{Vin}{n}$ |
| Breakdown Voltage [V] of Rectifier Diode | 200 | 150 |
| Loss [W] of Rectifier Diode (for output current 120A) | 102 | 80 |
| ※ $\alpha < 1$ | | |

First, the number of components added to the fundamental circuitry in the DC-DC converter 20 according to the present invention is smaller because an additional portion is only the two diodes. Therefore, an increase in the size and the cost resulting from the added components can be suppressed. In particular, because the lossless snubber circuit in the DC-DC converter 10 handles a large current, the capacitors C3 and C4 and the coil Lb are required to have a large size, thus limiting an area occupied by components.

A comparison of the surge voltage applied to a rectifier diode shows that the surge voltage in the DC-DC converter 20 according to the present invention is smaller. According to one specific example, when the voltage vin of the input power supply Vin = 300V and the turns ratio n = 8, a surge voltage on the order of 150V is applied to the rectifier diode in the DC-DC converter 10. For commercially-available actually-usable diodes, there are only diodes having discrete fixed breakdown voltages. For example, choosing a diode having a breakdown voltage of 180V is impractical. Specifically, typical breakdown voltages are 120V, 150V, 200V, and 300V. Accordingly, the DC-DC converter 10 uses a diode having a breakdown voltage of 200V.

In the case of the DC-DC converter 20, a surge voltage is on the order of 110V, which is a little less than three quarters. In this case, a commercially available diode having a breakdown voltage of 150V can be used. In table 1, $\alpha$ is a constant smaller than one, and the value of the constant $\alpha$ depends on the degree of coupling of the transformer.

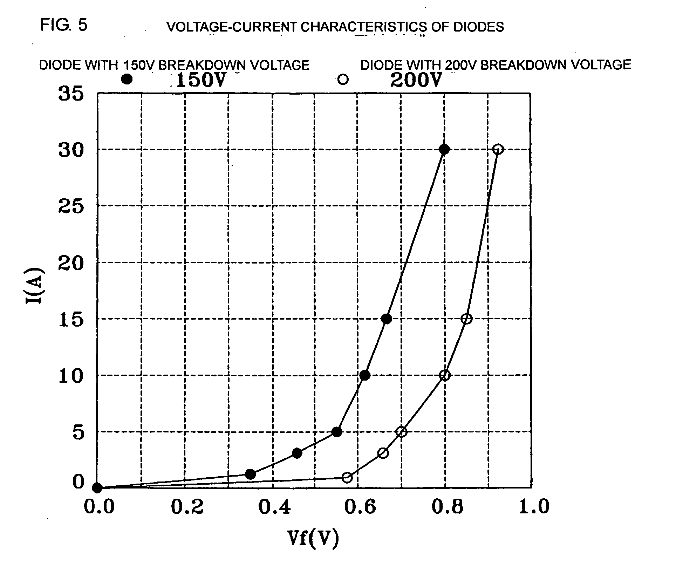

The voltage-current characteristics of two diodes, one having a breakdown voltage of 150V and the other having a breakdown voltage of 200V, are illustrated in Fig. 5. Fig. 5 shows that a diode having a lower breakdown voltage exhibits a smaller forward voltage drop and a smaller loss caused by a forward current. For example, when a converter is designed to have an output current of 120A for both types, the loss in a rectifier diode with 200V breakdown voltage is 102W, whereas the loss in a rectifier diode with 150V breakdown voltage is 80W. Consequently, the loss can be reduced by approximately 20%

As described above, the loss caused by a surge current can be reduced in a DC-DC converter according to the present invention more greatly than that in a known DC-DC converter. Additionally; because a surge voltage applied to a rectifier diode can be reduced, a rectifier diode that has a lower breakdown voltage can be used. Thus, the loss caused by a forward current can be reduced. As a result, according to an experiment conducted by the inventor of the present invention, the conversion efficiency of the DC-DC converter can be significantly increased to 95%. This can reduce the amount of generated heat and facilitate dealing with heat dissipation. Thus, an increase in the size and the weight of the DC-DC converter resulting from dealing with heat dissipation can be prevented.

(Second Embodiment)

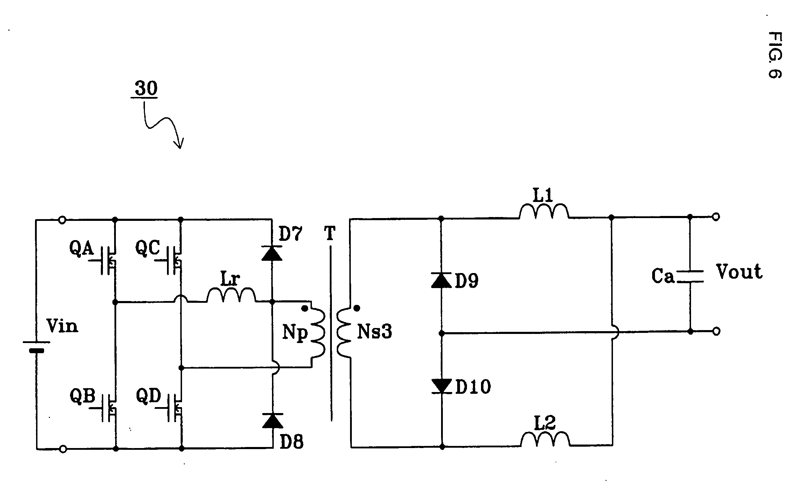

Fig. 6 is a circuit diagram of a DC-DC converter according to another embodiment of the present invention. A DC-DC converter 30 illustrated in Fig. 6 has a different secondary circuit configuration from that in the DC-DC converter 20 illustrated in Fig. 3. The primary circuit including the regenerative diodes D7 and D8, which is important to the present invention, is the same as that in the DC-DC converter 20, so only the secondary side will be described below.

The transformer T has a secondary winding Ns3. The secondary winding Ns3 does not have a center tap. The number of turns in the secondary winding Ns3 is the same as the number of turns in one side from the center tap in the secondary winding Ns2 in the DC-DC converter 20. First and second ends of the secondary winding Ns3 are connected together via choke coils L1 and L2, respectively, and then connected to a first end of the output terminal Vout. The first and second ends of the secondary winding Ns3 are connected to a cathode of a rectifier diode D9 and a cathode of a rectifier diode D10, respectively. An anode of the rectifier diode D9 and an anode of the rectifier diode D10 are connected together and then connected to a second end of the output terminal Vout. A smoothing capacitor Ca is connected between the first and second ends of the output terminal Vout.

The DC-DC converter 30 includes a current-doubler rectifier smoothing circuit that uses two typical rectifier diodes at the secondary side. When a voltage that is positive on the resonant coil Lr side is applied to the primary side, a forward voltage to the rectifier diode D10 occurs in the secondary winding Ns3, and a current flows from the secondary winding Ns3 to the choke coil L1 to a load (not shown) to the rectifier diode D10 to the secondary winding Ns3. This current increases with time. When the voltage become nonexistent at the primary side, a current also flows in the same path, but the current value reduces with time. When a voltage that is negative on the resonant coil Lr side is applied to the primary side, oppositely, a forward voltage to the rectifier diode D9 occurs in the secondary winding Ns3. A current flows from the secondary winding Ns3 to the choke coil L2 to a load (not shown) to the rectifier diode D9 to the secondary winding Ns3. Also at this time, the rectifier diode D9 acts as a freewheeling diode, and the current passing through the choke coil L1 continues flowing for a while from the choke coil L1 to a load (not shown) to the rectifier diode D9 to the choke coil L1 while reducing with time. When a voltage that is positive on the resonant coil Lr side is then applied to the primary side, the operation returns to the initial one, and a current is supplied to the load via the choke coil L1. Also at this time, the rectifier diode D10 acts as a freewheeling diode, and the current supplied to the load via the choke coil L2 flows and does not become zero for a while. The above-described behaviors are repeated. In this way, at the time when a current passing through a first choke coil is supplied to the load, a current passing through a second choke coil is also supplied to the load. That is why it is called the current-doubler method.

Also in a current-doubler circuit, when a reverse voltage is applied to the rectifier diode after a commutation current becomes zero, a reverse recovery current flows only for a short time. For example, a reverse recovery current passing through the rectifier diode D10 flows from the rectifier diode D10 to the rectifier diode D9 to the secondary winding Ns3 to the rectifier diode D10. When this reverse recovery current rapidly stops, a surge voltage occurs and is applied to the rectifier diode D10 in the reverse direction. This is the same as in the rectifier diode D9.

The DC-DC converter 30 according to the present invention includes the two regenerative diodes D7 and D8 at the primary side. Therefore, as in the case of the DC-DC converter 20, a surge resulting from a reverse recovery current in the rectifier diodes D9 and D10 can be absorbed with a small loss and regenerated.

(Third Embodiment)

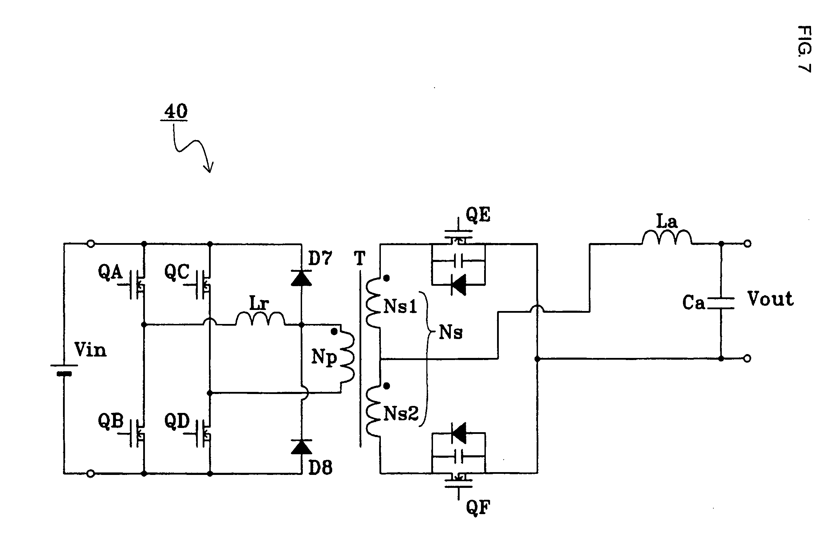

Fig. 7 is a circuit diagram of a DC-DC converter according to still another embodiment of the present invention. A DC-DC converter 40 illustrated in Fig. 7 uses, as the secondary rectifier circuit in the DC-DC converter 20 illustrated in Fig. 3, a synchronous rectification system employing a power MOSFET being a switching element. The primary circuit configuration is no different.

To use the synchronous rectification system, a circuit configuration is slightly changed. This respect will be described below. The first end of the secondary winding Ns is connected to a drain of a synchronous rectification switching element QE, and the second end thereof is connected to a drain of a synchronous rectification switching element QF. A source of the synchronous rectification switching element QF and a source of the synchronous rectification switching element QE are connected together and connected to the second end of the output terminal Vout. The midtap of the secondary winding Ns is connected to the first end of the output terminal Vout via the choke coil La. Each of the switching elements QE and QF includes an internal capacitor and a body diode. A gate being a control terminal is connected to a control circuit (not shown).

Each of the switching elements QF and QE is used in such a way that its rectification direction is a forward direction of the body diode, i.e., a direction from the source to the drain. Therefore, if the switching elements QF and QE are always off, the switching elements operate as a mere diode rectifier circuit. Turning the switching elements QF and QE on in synchronization with a period of time during application of a forward voltage to the body diode and causing a current to flow also between the drain and the source, which have low resistance, enables a reduction in the loss. A change is made to the midtap of the secondary winding Ns to be connected to the first end of the output terminal Vout in order to facilitate control by positioning the source of each of the switching elements QF and QE at a lower potential side.

Each of the switching elements QE and QF using an FET includes an internal capacitor. Even when the FET is off, a current for charging the internal capacitor can flow in a direction from the drain toward the source. This current works in substantially the same as a reverse recovery current in the rectifier diode in the DC-DC converter, so a surge occurs by the similar action. In the DC-DC converter 40 according to the present invention, the regenerative diodes D7 and D8 are disposed at the primary side. Therefore, as in the case of the DC-DC converter 20, a surge resulting from a reverse current in the switching elements QE and QF can be absorbed with a small loss and regenerated.

For a rectifier diode, a forward voltage drop is a major cause of the loss. For a synchronous rectification switching element, an on resistance is a cause of the loss. Typically, a switching element having a low breakdown voltage can have a reduced on resistance. Therefore, an applied surge voltage can be reduced in the DC-DC converter 40 according to the present invention, and a switching element that has a low on resistance can be used for synchronous rectification. Consequently, the loss in the switching element can be further reduced.

(Fourth Embodiment)

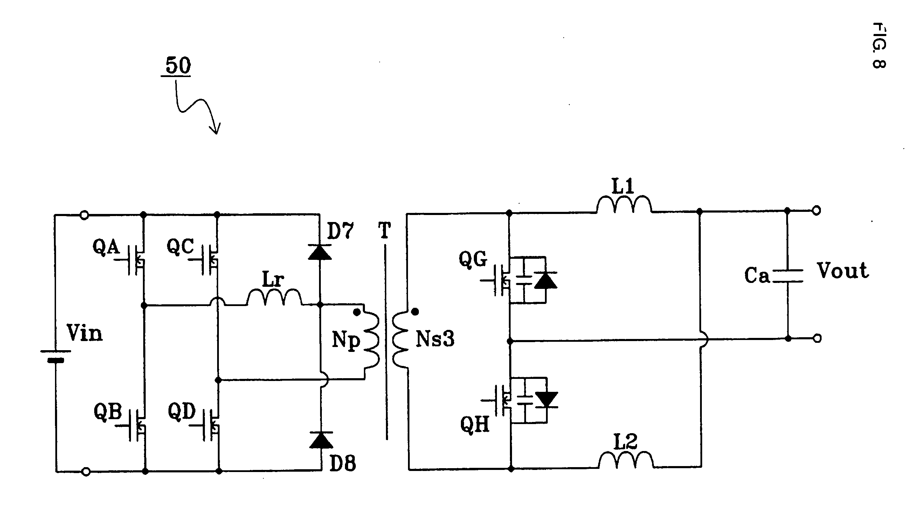

Fig. 8 is a circuit diagram of a DC-DC converter according to still further another embodiment of the present invention. A DC-DC converter 50 illustrated in Fig. 8 uses, as the secondary rectifier circuit in the DC-DC converter 30 illustrated in Fig. 6, a synchronous rectification system employing an FET being a switching element. The primary circuit configuration is no different.

To use the synchronous rectification system, as an alternative to the rectifier diodes D9 and D10, switching elements QG and QH are provided such that the body diodes of both switching elements have the same orientation. A gate being a control terminal of each of the switching elements QG and QH is connected to a control circuit (not shown). In the DC-DC converter 50, the source of each of the switching elements QG and QH is positioned in a low potential side by only substitution of the switching elements QG and QH. Therefore, unlike the DC-DC converter 40, a change is not made to wiring at the secondary side.

Also in the DC-DC converter 50, the regenerative diodes D7 and D8 are disposed at the primary side. As in the case of the DC-DC converter 30, a surge resulting from a reverse current in the switching elements QG and QH can be absorbed with a small loss and regenerated.

In the above-described embodiments, the resonant coil Lr is connected in series to the first terminal (+) of the input power supply Vin with respect to the primary winding Np. However, the resonant coil Lr may be connected in series to the second terminal (-). Also in this case, a regenerative diode is connected between the connection between the resonant coil and the primary winding and the first terminal of the input power supply Vin, and a regenerative diode is connected between the connection and the primary winding and the second terminal of the input power supply Vin.

**Claims**

1. A DC-DC converter comprising: an input power supply; an isolating transformer including a primary winding and a secondary winding; a resonant coil for zero voltage switching, the resonant coil being connected in series to the primary winding; a full-bridge switching circuit connected to a series circuit constituted by the primary winding and the resonant coil, the switching circuit being driven by phase shift control; and a rectifier circuit attached to the secondary winding,

   the DC-DC converter comprising: a first regenerative diode disposed between a connection between the primary winding and the resonant coil and a first terminal of the input power supply; and a second regenerative diode disposed between the connection and a second terminal of the input power supply.

2. The DC-DC converter according to Claim 1, wherein the rectifier circuit is a diode rectifier circuit.

3. The DC-DC converter according to Claim 1, wherein the rectifier circuit is a synchronous rectifier circuit that uses a field-effect transistor (FET).

4. The DC-DC converter according to any one of Claims 1 to 3, wherein the rectifier circuit is a center-tap rectifier circuit.

5. The DC-DC converter according to any one of Claims 1 to 3, wherein the rectifier circuit is a current-doubler rectifier circuit.

FIG. 1

Vout

La

Ca

C1 R1 D1 Ns Ns1 Ns2 D2 C2 R2

2 T 3

Np

Lr

QC QD

QA QB

Vin

1

FIG. 2

FIG. 3

FIG. 4

FIG. 5    VOLTAGE-CURRENT CHARACTERISTICS OF DIODES

FIG. 6

FIG. 7

EP 1 909 381 A1

FIG. 8

EP 1 909 381 A1

<div align="center">

**INTERNATIONAL SEARCH REPORT**

</div>

| | International application No. |
|---|---|
| | PCT/JP2005/016279 |

| A. CLASSIFICATION OF SUBJECT MATTER |
|---|
| ***H02M3/28***(2006.01) |
| According to International Patent Classification (IPC) or to both national classification and IPC |

| B. FIELDS SEARCHED |
|---|
| Minimum documentation searched (classification system followed by classification symbols) |
| ***H02M3/28***(2006.01) |

| Documentation searched other than minimum documentation to the extent that such documents are included in the fields searched |
|---|
| Jitsuyo Shinan Koho          1922-1996   Jitsuyo Shinan Toroku Koho   1996-2005 |
| Kokai Jitsuyo Shinan Koho    1971-2005   Toroku Jitsuyo Shinan Koho   1994-2005 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 7-107743 A  (Origin Electric Co., Ltd.), 21 April, 1995 (21.04.95), All pages (Family: none) | 1-5 |
| Y | JP 2005-168266 A  (Ube Kosan Kikai Kabushiki Kaisha), 23 June, 2005 (23.06.05), All pages (Family: none) | 1-5 |
| Y | JP 10-271822 A  (Fuji Electric Co., Ltd.), 09 October, 1998 (09.10.98), All pages (Family: none) | 1-5 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 November, 2005 (04.11.05) | 15 November, 2005 (15.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/016279 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-262560 A  (TDK Corp.),<br>13 September, 2002 (13.09.02),<br>All pages<br>(Family: none) | 3 |
| Y | JP 2003-189608 A  (Cohsel Kabushiki Kaisha),<br>04 July, 2003 (04.07.03),<br>All pages<br>(Family: none) | 5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Daiyohryo DC-DC converter no shutsuryoku seiryu diode niokeru musonshitsu snubber no teian'' (''Non-Dissipative Snubber for Rectifying Diodes in a High-Power DC-DC Converter. *IEEJ Transactions on Industry Applications,* 2005, vol. 125 (4), 366-371